# NEUE EUROPÄISCHE PATENTSCHRIFT

(11) **EP 3 680 599 B2**
(45) Veröffentlichungstag und Bekanntmachung des Hinweises auf die Entscheidung über den Einspruch: **12.03.2025**
(45) Hinweis auf die Patenterteilung: 18.08.2021
(21) Anmeldenummer: 20020008.7
(22) Anmeldetag: 07.01.2020
(51) Int. Cl.: F28F 27/00, F28D 9/00

(54) **VERFAHREN ZUM HERSTELLEN EINES PLATTENWÄRMETAUSCHERS SOWIE PLATTENWÄRMETAUSCHER MIT THERMOELEMENTEN ODER MESSWIDERSTÄNDEN**
METHOD FOR PRODUCING A PLATE HEAT EXCHANGER AND PLATE HEAT EXCHANGER WITH THERMOCOUPLES OR RESISTORS
PROCÉDÉ DE FABRICATION D'UN ÉCHANGEUR DE CHALEUR À PLAQUES AINSI QU'ÉCHANGEUR DE CHALEUR À PLAQUES POURVU D'ÉLÉMENTS THERMIQUES OU DE RÉSISTANCES DE MESURE

(30) Priorität: 08.01.2019 EP 19020007
(43) Veröffentlichungstag der Anmeldung: 15.07.2020
(73) Patentinhaber: Linde GmbH, 82049 Pullach (DE)
(72) Erfinder: Flüggen, Rainer, 83673 Bichl (DE); Freko, Pascal, 82547 Eurasburg (DE); Braun, Konrad, 83661 Lenggries (DE); Hoffmann, Rainer, 82008 Unterhaching (DE); Gewald, Stefan, 82061 Neuried (DE); Blank, Janine, 83361 Kienberg (DE)
(74) Vertreter: Meilinger, Claudia Sabine

(56) Entgegenhaltungen:
- EP-A1- 3 409 354
- WO-A1-2014/056587
- WO-A1-2014/096779
- WO-A1-2018/215095
- DE-A1- 102009 042 994
- DE-A1- 102009 042 994
- DE-A1- 3 005 075
- JP-A- 2002 156 194
- JP-A- 2014 169 809
- US-A1- 2013 206 359
- US-A1- 2015 241 141
- Traduction machine de JP 2014169809 A
- Traduction machine de JP2002156194 A
- M. A. TAYLOR: "Plate-fin heat exchangers - Guide to Their Specification an Use", PFHE GUIDE COMMITTEE, 1 January 1987 (1987-01-01), pages 1 - 138, XP055340961, [retrieved on 20170201]
- "HANDBOOK OF MODERN SENSORS,", 2010, pages: 1 - 680
- Traduction machine de DE 102009042994 A1
- Natural convection heat transfer in boiling of metals, publié en 1971
- Duden: Vielzahl
- DWDS: Vielzahl

## Beschreibung

Die Erfindung betrifft ein Verfahren zum Herstellen eines Plattenwärmetauschers sowie einen Plattenwärmetauscher mit einer Vielzahl an Trennplatten und einer Vielzahl an Lamellen, wobei jeweils zwischen zwei benachbarten Trennplatten eine Lamelle angeordnet ist.

### Stand der Technik

Plattenwärmetauscher weisen eine Vielzahl an parallel zueinander angeordneten Trennplatten oder Trennbleche (engl. "seperator plates") und eine Vielzahl an Lamellen (sogenannter Fins) auf, wobei zwischen zwei benachbarten Trennplatten je eine Lamelle angeordnet ist, so dass eine Vielzahl von parallelen Kanälen zwischen benachbarten Platten gebildet wird, die von einem Medium durchfließbar sind. Zu den Seiten hin werden die Lamellen durch sogenannte Sidebars (Randleisten) begrenzt, die mit den angrenzenden Platten verlötet sind. Auf diese Weise wird eine Vielzahl an parallelen Wärmeübertragungspassagen gebildet, so dass Medien z.B. im Gegenstrom aneinander vorbeigeführt werden können, um einen indirekten Wärmeaustausch zu vollziehen.

Thermische Spannungen infolge unterschiedlicher Wärmeausdehnungen aus differentiellen Temperaturunterschieden können zur mechanischen Schädigung der Dichtheit zwischen den Wärmeübertragungspassagen bis hin zur Undichtigkeit des Plattenwärmetauschers gegenüber seiner Umgebung führen. Zur Analyse des Temperaturfeldes kann ein derartiger Plattenwärmetauscher beispielsweise mit einer Temperaturmessung auf einer Oberfläche seiner Außenhaut ausgestattet sein. Die Temperaturen auf der Außenhaut liefern jedoch nur einen lokalen Wert, mit dem unter Annahmen auf die Temperatur im Inneren des Plattenwärmetauschers zurückgeschlossen werden kann. Diese Temperaturmessungen können jedoch aufgrund der Messung an der Außenhaut von Umwelteinflüssen beeinflusst werden.

Die WO 2014/056587 A1 beschreibt beispielsweise einen Plattenwärmetauscher mit einem Lichtwellenleiter zur Temperaturmessung. Der Lichtwellenleiter ist dabei in einer offenen Nut positioniert, die entweder in einer Lamelle oder in einem Trennblech des Plattenwärmetauschers vorgesehen ist.

JP2014169809 A offenbart den jeweiligen Oberbegriff der unabhängigen Patentansprüche.

Es ist wünschenswert, eine verbesserte Möglichkeit zur Temperaturmessung in Plattenwärmetauschern bereitzustellen.

### Offenbarung der Erfindung

Vor diesem Hintergrund werden ein Verfahren zum Herstellen eines Plattenwärmetauschers sowie ein Plattenwärmetauscher mit einer Vielzahl an Trennplatten und einer Vielzahl an Lamellen, wobei jeweils zwischen zwei benachbarten Trennplatten eine Lamelle angeordnet ist, mit den Merkmalen der unabhängigen Patentansprüche vorgeschlagen. Vorteilhafte Ausgestaltungen sind Gegenstand der Unteransprüche sowie der nachfolgenden Beschreibung.

Im Rahmen des vorliegenden Verfahrens zum Herstellen des Plattenwärmetauschers wird wenigstens eine Kapillare mit einer Vielzahl von Thermoelemente oder Messwiderstandselementen in wenigstens eine Trennplatte der Vielzahl von Trennplatten eingebracht. Jeweils abwechselnd werden eine Trennplatte der Vielzahl von Trennplatten und eine Lamelle der Vielzahl von Lamellen angeordnet und miteinander stoffschlüssig verbunden. Somit wird jeweils zwischen zwei parallel zueinander verlaufende Trennplatten eine Lamelle angeordnet.

Der vorliegenden Erfindung liegt die Erkenntnis zu Grunde, eine Vielzahl von Thermoelementen oder ein Messwiderstandselementen in einer Kapillare in wenigstens eine Trennplatte des Plattenwärmetauschers einzubringen und zur Überwachung der Temperatur innerhalb des Plattenwärmetauschers, insbesondere schon bei dessen Herstellung, zu nutzen.

Als ein Thermoelement sei in diesem Zusammenhang insbesondere ein Element verstanden, welches den sog. thermoelektrischen Effekt oder Seebeck-Effekt zur Messung einer Temperatur ausnutzt. Insbesondere umfasst ein Thermoelement zwei elektrische Leiter aus unterschiedlichen Metallen, welche an einem Ende miteinander verbunden sind, z.B. mittels einer Schweißverbindung. Als thermoelektrischer Effekt oder Seebeck-Effekt wird das Auftreten einer elektrischen Spannung bzw. einer Potentialdifferenz (sog. Thermospannung) auf Grund eines Temperaturgefälles entlang eines elektrischen Leiters bezeichnet. Diese elektrische Spannung bzw. Potentialdifferenz ist insbesondere abhängig von der Temperaturdifferenz entlang des Leiters und ferner insbesondere für jedes Leitermaterial unterschiedlich. In dem Thermoelement werden somit bei einer Temperaturdifferenz in den beiden aus unterschiedlichen Materialien gefertigten Leitern unterschiedliche Thermospannungen erzeugt. Die Verbindungsstelle, an welcher die beiden Leiter des Thermoelements an ihrem einen Ende miteinander verbunden sind, wird zweckmäßigerweise der zu messenden Temperatur ausgesetzt und auch als Messstelle bezeichnet. An ihren anderen, nicht miteinander verbundenen Enden (sog. Vergleichsstelle) werden die beiden Leiter insbesondere mit einem Spannungsmessgerät verbunden. Aus der an diesen Enden bzw. an dieser Vergleichsstelle abgreifbaren Spannungsdifferenz kann auf die Temperatur an der Messstelle rückgeschlossen werden.

Alternativ (prinzipiell aber auch zusätzlich) kann eine Vielzahl von Messwiderstandselementen in einer Kapillare in wenigstens eine Trennplatte des Plattenwärmetauschers eingebracht und zur Überwachung der Temperatur innerhalb des Plattenwärmetauschers, insbesondere schon bei dessen Herstellung, genutzt werden. Messwiderstandselemente sind an sich bekannt und werden auch als temperaturabhängige Widerstände oder Widerstandsthermometer bezeichnet. Es handelt sich um elektrische Bauelemente, die die Temperaturabhängigkeit des elektrischen Widerstands eines elektrischen Leiters zur Messung der Temperatur ausnutzen. Als elektrischer Leiter werden in der Regel reine Metalle, insbesondere aber korrosionsbeständiges Platin, eingesetzt. Vorteil ist hierbei auch der nahezu lineare Zusammenhang zwischen Temperatur und Widerstand. Platin-Widerstandsthermometer können in entsprechender Ausführung bis zu 1000°C verwendet werden. Bekannt sind genormte Platin-Messwiderstände wie Pt100 oder Pt1000, bei denen der Nennwiderstand R0 bei 0°C 100 Ohm bzw. 1 kOhm beträgt. Zur Widerstandsmessung wird im einfachsten Fall der Spannungsabfall an dem von einem konstanten Messstrom durchflossenen Messwiderstand gemessen, wobei hierfür zumeist eine Wheatstone-Brücke in einer Zweileiter-Schaltung verwendet wird. Um den Einfluss langer Zuleitungen zu dem Sensor auf den Messwert zu vermieden, sind Drei- oder Vierleiter-Schaltungen bekannt. Hierdurch sind bei entsprechend höherem Platzbedarf deutlich höhere Genauigkeiten insbesondere unabhängig vom verwendeten Anschlusskabelmaterial zu erreichen.

Thermoelemente als auch Messwiderstandselemente weisen eine hohe Hitzebeständigkeit auf und ermöglichen es auch bei hohen Temperaturen präzise Messwerte zu erfassen. Daher eignen sich Thermo- und Messwiderstandselemente besonders, um bereits während des Herstellungsprozesses des Plattenwärmetauschers verwendet zu werden, da sie den beim stoffschlüssigen Verbinden auftretenden hohen Temperaturen standhalten und dabei eine präzise Erfassung von Temperaturwerten bzw. Temperaturmesswerten ermöglichen. Insbesondere sind Thermo- und Messwiderstandselemente wesentlich hitzebeständiger als herkömmliche Lichtwellenleiter. Daher können herkömmliche Lichtwellenleiter üblicherweise während des Herstellungsprozesses eines Plattenwärmetauschers nicht eingesetzt werden, da sie den dabei auftretenden hohen Temperaturen nicht standhalten würden. Zwar mag die Möglichkeit bestehen, hochtemperaturbeständige Lichtwellenleiter zu verwenden, welche derartig hohen Temperaturen ausgesetzt werden können, jedoch sind derartige hochtemperaturbeständige Lichtwellenleiter sehr kostenintensiv. Im Gegensatz dazu kann mit Hilfe von Thermo- oder Messwiderstandselementen auf wesentliche günstigere Weise eine Temperaturerfassung bzw. Temperaturüberwachung nicht nur während des Betriebs, sondern auch während des Herstellungsprozesses des Plattenwärmetauschers ermöglicht werden.

Erfindungsgemäß ist pro Kapillare eine Vielzahl von Thermo- oder Messwiderstandselementen angeordnet. Die derart ausgebildete Kapillare wird im Folgenden als "Thermoelement-Profilstab" bzw. als "Messwiderstandselement-Profilstab" bezeichnet. Diese Thermo- oder Messwiderstandselemente in der Kapillare sind zweckmäßigerweise in geeigneten Abständen zueinander angeordnet, um die Temperatur innerhalb des Plattenwärmetauschers an den entsprechenden Stellen entlang des Profilstabs, also entlang der Längsausdehnung der Kapillare, effektiv erfassen zu können, insbesondere um Temperaturunterschiede bzw. eine Temperaturverteilung bzw. ein Temperaturfeld erfassen zu können. Ferner ist insbesondere in einer Vielzahl von Trennplatten, insbesondere in mindestens 10%, vorzugsweise mindestens 20%, 25%, 30%, 40% oder mindestens 50% der Trennplatten, jeweils eine derartige Kapillare angeordnet. Insbesondere sind die Trennplatten mit Kapillare in geeigneten Abständen zueinander angeordnet, um effektiv die Temperatur innerhalb des Plattenwärmetauschers zu erfassen und um ferner insbesondere Temperaturunterschiede bzw. eine Temperaturverteilung bzw. ein Temperaturfeld erfassen zu können. Insbesondere kann es somit ermöglicht werden, auf kleinem Bauraum Temperaturprofile in dem Plattenwärmetauscher zu erfassen.

Die speziellen Typen von Thermo- oder Messwiderstandselementen in der Kapillare können insbesondere gemäß den spezifischen Eigenschaften dieser Typen und ferner insbesondere in Abhängigkeit von den Bedingungen in dem jeweiligen Plattenwärmetauscher gewählt werden. Thermoelement-Typen beschreiben zweckmäßigerweise die Kombination der Materialen der beiden in dem jeweiligen Thermoelement verwendeten Leiter. Beispielsweise können im Rahmen des vorliegenden Verfahrens Thermoelemente vom Typ K verwendet werden (mit einem Leiter aus NiCr und dem anderen aus Ni) und/oder vom Typ J (mit Leitern aus Fe und CuNi) und/oder vom Typ L (mit Leitern aus Fe und CuNi). Messwiderstandselemente sind bevorzugt Pt100- oder Pt1000-Messwiderstände, wobei je nach Genauigkeitsanforderungen und Platzbegrenzung Zwei-, Drei- oder Vierleiter-Schaltungen verwendet werden.

Vorzugsweise werden während des stoffschlüssigen Verbindens bei der Herstellung des Plattenwärmetauschers mit Hilfe der Vielzahl von Thermo- oder Messwiderstandselementen der wenigstens einen Kapillare Temperaturwerte erfasst und das stoffschlüssige Verbinden wird anhand der bzw. in Abhängigkeit von den erfassten Temperaturwerten überwacht. Aufgrund seiner hohen Hitzebeständigkeit kann mit Hilfe der Vielzahl von-Thermo- oder Messwiderstandselementen die Temperatur innerhalb des Plattenwärmetauschers während dessen Herstellungsprozesses bzw. während des stoffschlüssigen Verbindens der Trennplatten und der Lamellen präzise erfasst und überwacht werden. Im Gegensatz zu Lichtwellenleitern kann mit Hilfe von Thermo- oder Messwiderstandselementen auf einfache Weise eine Temperaturerfassung und Temperaturüberwachung sogar während des Herstellungsprozesses des Plattenwärmetauschers ermöglicht werden. Insbesondere kann der Prozess des stoffschlüssigen Verbindens in Abhängigkeit von den erfassten Temperaturwerten durchgeführt bzw. gesteuert und/oder geregelt werden. Beispielsweise kann in Abhängigkeit von den erfassten Temperwerten überwacht werden, ob die Trennbleche bzw. Lamellen im Zuge des Verbindungsprozesses ausreichend hoch erhitzt wurden, um eine gewünschte Festigkeit bzw. Stärke der Verbindung zu erreichen, und/oder ob beim Verbindungsprozess Temperaturgradienten auftreten, die die Dauerhaftigkeit bzw. Festigkeit der Verbindung gefährden könnten.

Vorteilhafterweise werden die Trennplatten und die Lamellen jeweils mittels eines Lötprozesses miteinander stoffschlüssig verbunden, vorzugsweise mittels eines Vakuum-Lötprozesses. Beispielsweise kann zu diesem Zweck ein Lot auf die Flächen der Trennbleche aufgebracht werden und anschließend können die Trennbleche und die Lamellen mit den seitlich abschließend angeordneten Randleisten (Sidebars) abwechselnd aufeinander gestapelt werden. Anschließend wird der Plattenwärmetauscher bzw. dessen Zentralkörper durch Erhitzen in einem Ofen verlötet. Bei einem derartigen Löten kann beim Aufheizen bzw. Abkühlen eine ungleichmäßige Temperaturverteilung innerhalb des Plattenwärmetauschers entstehen. Dies kann aufgrund der unterschiedlichen thermischen Dehnungen und der daraus resultierenden Verformungsunterschiede zu Spaltbildungen innerhalb des Plattenwärmetauschers durch lose oder noch nicht ausreichend fest verbundene Lamellen und Trennbleche führen. Besonders bevorzugt wird daher während des Lötprozesses mit Hilfe der Vielzahl von Thermo- oder Messwiderstandselements in der wenigstens einen Kapillare Temperaturwerte erfasst und das Löten wird anhand der erfassten Temperaturwerte überwacht und ferner vorzugsweise in Abhängigkeit von den erfassten Temperaturwerten gesteuert bzw. geregelt. Durch das aufwandsarme und präzise Erfassen der Temperaturwerte mit Hilfe der Thermo- oder Messwiderstandselemente kann daher die Temperaturverteilung und ferner insbesondere ein Temperaturfeld bzw. Temperaturunterschiede innerhalb des Plattenwärmetauschers während des Lötens bestimmt und überwacht werden. Insbesondere kann somit überwacht und verhindert werden, dass es aufgrund unterschiedlicher thermischer Dehnungen zu Spaltbildungen innerhalb des Plattenwärmetauschers kommt.

Vorteilhafterweise wird die wenigstens eine Kapillare in eine Nut in der wenigstens einen Trennplatte eingebracht. Diese Nut kann insbesondere derart in einem Inneren der Trennplatte vorgesehen sein, dass die Kapillare zweckmäßigerweise vollständig von dem Material der Trennplatte umschlossen bzw. abgedeckt ist. Insbesondere kann die Nut im Zuge des Herstellungsprozesses des Plattenwärmetauschers in die wenigstens eine Trennplatte eingebracht werden, beispielsweise mittels Fräsens. Anschließend kann die Kapillare zweckmäßigerweise in die hergestellte Nut eingebracht werden. Ebenso ist es denkbar, dass die wenigstens eine Trennplatte bereits mit der entsprechenden Nut von einem entsprechenden Hersteller bezogen wird und im Zuge des Herstellungsprozesses nur die Kapillare in die Nut eingebracht wird.

Vorzugsweise wird die wenigstens eine Trennplatte, die die Kapillare mit der Vielzahl von Thermo- oder Messwiderstandselement aufweist, aus einer ersten Teilplatte und einer zweiten Teilplatte mit aneinandergrenzenden Flächen gebildet. Als Teilplatten können dabei insbesondere Trennplatten verwendet werden, also Trennplatten, wie sie im Übrigen bei der Herstellung des Plattenwärmetauschers verwendet werden. Es werden dann zwei statt einer Trennplatte eingesetzt und die Kapillare dort angeordnet.

Insbesondere wird vorzugsweise die Nut in zumindest eine der beiden einander zugewandten angrenzenden Flächen der ersten und zweiten Teilplatte eingebracht. Die Nut kann beispielsweise durch Fräsen entstehen. Entweder wird die Nut nur in eine Teilplatte eingebracht oder insbesondere zu gleichen Teilen (zwei "Halbnuten") in beide aneinandergrenzende Flächen der Teilplatten.

Insbesondere ist die Kapillare dabei derart in die Nut eingebracht, dass sie vollständig von dem Material der ersten Teilplatte und der zweiten Teilplatte umschlossen bzw. abgedeckt ist. Analog zu obiger Erläuterung können die Nuten insbesondere im Zuge des Herstellungsprozesses des Plattenwärmetauschers in die Teilplatten beispielsweise durch Fräsen eingebracht werden oder es können zweckmäßigerweise auch bereits mit Nuten versehene Teilplatten bezogen werden. Die Teilplatten können sich dabei andrerseits auch von den Trennplatten, in welchen keine Kapillaren eingebracht sind, unterscheiden und beispielsweise nur halb so dick wie diese Trennplatten sein. Besonders bevorzugt ist es denkbar, dass als erste und zweite Trennplatte jeweils eine der Trennplatten des Plattenwärmetauschers verwendet wird, in welche sonst keine Kapillare eingesetzt ist. Im Zuge des Herstellungsprozesses des Plattenwärmetauschers kann dabei insbesondere in zwei derartige Trennplatten jeweils eine Halbnut eingebracht werden, z.B. durch Fräsen. Die entsprechende Kapillare kann nach Aufeinanderlegen der entsprechenden Flächen der Trennplatten in die so entstehende Vollnut eingebracht werden und die beiden Trennplatten können dann miteinander stoffschlüssig verbunden werden, beispielsweise durch Löten oder Schweißen.

Bevorzugt ist die wenigstens eine Kapillare außerhalb der wenigstens einen Trennplatte metallisch gekapselt bzw. als metallische Kapsel ausgebildet bzw. mit einem geeigneten Metall umhüllt. Insbesondere weist die Kapillare somit einen ersten Teilbereich bzw. Abschnitt innerhalb der Trennplatte und einen zweiten Teilbereich bzw. Abschnitt außerhalb der Trennplatte auf. Alternativ oder zusätzlich ist die wenigstens eine Kapillare vorzugsweise innerhalb der wenigstens einen Trennplatte dünnwandig ausgebildet. Die Kapillare ist somit insbesondere in ihrem ersten Teilbereich nicht metallisch gekapselt.

Bevorzugt wird die wenigstens eine Kapillare aus einer Prozesskammer hinaus geführt, in welcher das stoffschlüssige Verbinden durchgeführt wird, insbesondere aus einem (Vakuum-)Ofen zum Verlöten. Insbesondere durch die metallische Kapselung im genannten zweiten Teilbereich außerhalb der Trennplatte kann somit verhindert werden, dass während des Verbindungsprozesses Ausdampfungen in die Prozesskammer bzw. den Ofenraum abgegeben werden.

Es versteht sich, dass der Herstellungsprozess des Plattenwärmetauschers noch weitere zweckmäßige Schritte umfassen kann, bis der Plattenwärmetauscher in Betrieb genommen werden kann. Erfindungsgemäß werden die Lamellen zu den Seiten hin durch sogenannte Sidebars (Randleisten) begrenzt, die mit den angrenzenden Trennplatten stoffschlüssig verbunden werden, z.B. durch Löten. Auf diese Weise wird zweckmäßigerweise eine Vielzahl an parallelen Wärmeaustauschpassagen gebildet, durch welche im regulären Betrieb des Plattenwärmetauschers zum indirekten Wärmetausch zwei Fluide bzw. Medien geleitet werden können. Besonders vorteilhaft wird die wenigstens eine Kapillare mit der Vielzahl von Thermo- oder Messwiderstandselementen im späteren Verlauf des Herstellungsprozesses und auch nach komplett durchgeführtem Herstellungsprozess nicht aus der wenigstens einen Trennplatte entfernt. Die wenigstens eine Kapillare mit der Vielzahl von Thermo- oder Messwiderstandselementen verbleibt somit auch nach dem Herstellungsprozess in dem Plattenwärmetauscher und kann zweckmäßigerweise im regulären Betrieb desselben verwendet werden.

Wenn eine Kapillare mit der Vielzahl von Thermo- oder Messwiderstandselementen beim Lötprozess in eine Nut eingelegt ist, wird diese Kapillare während des Lötens vom Lot umschlossen und kann danach (bspw. für den Fall von Reparaturen oder dergleichen) nicht mehr entfernt werden. Um dies zu vermeiden, müsste eine größere Kapillare bspw. aus Edelstahl oder einem anderen Material mit deutlich höherem Schmelzpunkt als Aluminium in die Nut eingelegt werden. Der Innenraum dieser größeren Kapillare bleibt lotfrei, so dass eine Temperaturmesseinrichtung mit Messelement ein- und wieder ausgeführt werden kann. Das gleiche Vorgehen ist auch notwendig, wenn die Temperaturmesseinrichtung nicht während des Lötprozesses im Plattenwärmetauscher sein soll. Hätte man dann nur eine leere Nut, würde diese mit Lot gefüllt werden. Auch hier muss folglich eine größere Kapillare mit eingelötet werden, die dann den Platz für die Temperaturmesseinrichtung freihält. Hierfür kann beispielsweise ein temperaturstabiles Edelstahlröhrchen mit möglichst geringer Wandstärke genutzt werden (bspw. 0,2mm), um den erforderlichen Querschnitt sicherzustellen.

Eine besonders bevorzugte Ausführungsform der Erfindung betrifft ein Verfahren zum Betreiben eines Plattenwärmetauschers, der gemäß einer bevorzugten Ausführungsform des erfindungsgemäßen Verfahrens hergestellt wurde. Im Zuge dieses Betriebs werden ein erstes Fluid und ein zweites Fluid durch den Plattenwärmetauscher geleitet, insbesondere durch die Wärmeaustauschpassagen, welche durch die miteinander verbundenen Lamellen und Trennbleche, seitlich begrenzt durch die Randleisten (Sidebars), gebildet werden. Zweckmäßigerweise werden diese beiden Fluide im Gegenstrom aneinander vorbeigeführt und können insbesondere einen indirekten Wärmeaustausch vollziehen. Während dieses Betriebs des Plattenwärmetauschers werden besonders vorteilhaft mit Hilfe der Vielzahl von Thermo- oder Messwiderstandselements in der wenigstens einen Kapillare Temperaturwerte erfasst. Somit wird es ermöglicht, Temperaturerfassung während des stoffschlüssigen Verbindungsprozesses der Lamellen und der Trennbleche und ferner während des regulären Betriebs des Plattenwärmetauschers mit denselben Temperaturmesseinrichtungen in Form des wenigstens einen Thermo- oder Messwiderstandselements, also insbesondere mittels eines oder mehrerer der oben definierten Thermo- oder Messwiderstandselement-Profilstäbe, durchzuführen. Die Thermo- oder Messwiderstandselemente, welche im Zuge des Herstellungsprozesses zum Überwachen des stoffschlüssigen Verbindungsprozesses, vorzugsweise des Lötens bzw. Vakuum-Lötens, verwendet werden, können somit auch im regulären Betrieb des Plattenwärmetauschers noch weiter verwendet werden, um Temperaturwerte zu erfassen, insbesondere um Temperaturunterschiede bzw. eine Temperaturverteilung bzw. ein Temperaturfeld innerhalb des Plattenwärmetauschers zu ermitteln. Insbesondere ist es somit nicht notwendig, für den regulären Betrieb zusätzliche Temperaturmessvorrichtungen vorzusehen, wodurch Kosten und Aufwand eingespart werden können.

Gemäß einer bevorzugten Ausführungsform wird der Betrieb des Plattenwärmetauschers in Abhängigkeit von den während des Betriebs des Plattenwärmetauschers erfassten Temperaturwerten gesteuert und/oder geregelt. Insbesondere können die aktuell erfassten Temperaturwerte somit verwendet werden, um einen effektiven, bestmöglichen Betrieb des Plattenwärmetauschers zu ermöglichen. Ferner werden die erfassten Temperaturwerte insbesondere verwendet, um eine Optimierung des Betriebs bzw. der Betriebsweise des Plattenwärmetauschers vorzunehmen, zweckmäßigerweise auch um die verbleibende Lebensdauer des Plattenwärmetauschers verlängern zu können.

Vorteilhafterweise werden in Abhängigkeit von den während des Betriebs des Plattenwärmetauschers erfassten Temperaturwerten ein Lebensdauerverbrauch und/oder eine verbleibende Lebensdauer des Plattenwärmetauschers bestimmt. Die aktuell erfassten Temperaturwerte werden zu diesem Zweck ausgewertet und können dabei beispielsweise mit gespeicherten Daten bzw. zu früheren Zeitpunkten erfassten Temperaturwerten verglichen werden und/oder beispielsweise als Eingangsdaten für ein theoretisches Modell bzw. eine Simulation des Plattenwärmetauschers verwendet werden. Mittels der innerhalb des Plattenwärmetauschers angeordneten Thermo- oder Messwiderstandselemente können somit Temperaturwerte im Inneren des Plattenwärmetauschers erfasst werden, was eine besonders effektive und aufwandswarme Überwachung der Lebendsauer ermöglicht. Insbesondere können aus den Temperaturwerten thermische bzw. mechanische Spannungen innerhalb des Plattenwärmetausches abgeleitet werden, in Abhängigkeit von welchen der Lebensdauerverbrauch und/oder die verbleibende Lebensdauer des Plattenwärmetauschers zweckmäßigerweise bestimmt werden können. Ferner können die aktuell erfassten Temperaturwerte zweckmäßigerweise auch archiviert und beispielsweise in einer Steuereinheit hinterlegt werden, um für einen Vergleich mit zu einem späteren Zeitpunkt erfassten Temperaturwerten und somit für einen zukünftige Bestimmung des Lebensdauerverbrauchs und/oder der verbleibenden Lebensdauer verwendet zu werden.

Vorzugsweise wird in Abhängigkeit von den während des Betriebs des Plattenwärmetauschers erfassten Temperaturwerten eine Betriebshistorie des Plattenwärmetauschers bestimmt. Als Betriebshistorie seien in diesem Zusammenhang insbesondere Prozesse, Prozessveränderungen bzw. Gegebenheiten in dem Plattenwärmetauscher zu verstehen, welche sich auf den Lebensdauerverbrauch bzw. auf die verbleibende Lebensdauer des Plattenwärmetauschers auswirken. Insbesondere betrifft die Betriebshistorie von dem Plattenwärmetauscher durchgeführte Lastwechsel, also insbesondere Prozesse, im Zuge derer sich die in dem Plattenwärmetauscher auftretenden mechanischen Spannungen verändern. Insbesondere werden als Betriebshistorie in Abhängigkeit von den während des Betriebs des Plattenwärmetauschers erfassten Temperaturwerten eine Anzahl von durchgeführten Lastwechseln bestimmt und/oder eine Geschwindigkeit, mit welcher einzelne Lastwechsel durchgeführt werden.

Ein erfindungsgemäßer Plattenwärmetauscher weist eine Vielzahl an Trennplatten und eine Vielzahl an Lamellen auf, wobei jeweils zwischen zwei benachbarten Trennplatten der Vielzahl von Trennplatten eine Lamelle der Vielzahl von Lamellen angeordnet ist, wobei jeweils abwechselnd eine Trennplatte und eine Lamelle angeordnet und miteinander stoffschlüssig verbunden sind, wobei die Lamellen zu den Seiten hin durch Randleisten begrenzt sind, und wobei die Randleisten mit den angrenzenden Trennplatten stoffschlüssig verbunden sind, wobei wenigstens eine Kapillare mit wenigstens einem Thermo- und/oder Messwiderstandselement in wenigstens einer der Trennplatten eingebracht ist. Erfindungsgemäß sind pro Kapillare eine Vielzahl von Thermo- oder Messwiderstandselementen angeordnet. Vorteile und bevorzugte Ausgestaltungen des erfindungsgemäßen Verfahrens und des erfindungsgemäßen Plattenwärmetauschers ergeben sich aus der vorliegenden Beschreibung in analoger Weise.

Bei einem erfindungsgemäßen Plattenwärmetauscher ist vorzugsweise die wenigstens eine Trennplatte aus einer ersten Teilplatte und einer zweiten Teilplatte mit aneinandergrenzenden Flächen gebildet, wobei eine Nut in zumindest eine der beiden angrenzenden Flächen der ersten und zweiten Teilplatte eingebracht ist und wobei die wenigstens eine Kapillare in der Nut angeordnet ist.

Ein erfindungsgemäßer Plattenwärmetauscher ist insbesondere gemäß einer bevorzugten Ausführungsform des erfindungsgemäßen Verfahrens hergestellt.

Ferner ist der Plattenwärmetauscher vorzugsweise dazu eingerichtet, gemäß einer bevorzugten Ausführungsform des erfindungsgemäßen Verfahrens wie obig erläutert betrieben zu werden. Insbesondere kann zu diesem Zweck eine Steuereinheit vorgesehen sein, beispielsweise in Form einer speicherprogrammierbaren Steuerung (SPS), welche, insbesondere programmtechnisch, dazu eingerichtet ist, eine bevorzugte Ausführungsform eines erfindungsgemäßen Verfahrens durchzuführen. Insbesondere kann diese Steuereinheit die während des Betriebs des Plattenwärmetauschers mit Hilfe der Vielzahl von Thermo- oder Messwiderstandselementen der wenigstens einen Kapillare erfassten Temperaturwerte empfangen und zweckmäßigerweise abspeichern und/oder auswerten, insbesondere um den Plattenwärmetauscher entsprechend zu steuern bzw. zu regeln und/oder um den Lebensdauerverbrauch bzw. die verbleibende Lebensdauer zu bestimmen und/oder um die Betriebshistorie zu bestimmen.

Weitere Vorteile und Ausgestaltungen der Erfindung ergeben sich aus der Beschreibung und der beiliegenden Zeichnung.

Weitere mögliche Ausgestaltungen der Erfindung umfassen auch nicht explizit genannte Kombinationen von zuvor oder im Folgenden bezüglich der Ausführungsbeispiele beschriebenen Merkmalen. Dabei wird der Fachmann auch hier beschriebene Einzelaspekte als Verbesserungen oder Ergänzungen zu den jeweiligen Ausführungsformen des erfindungsgemäßen Plattenwärmetauschers oder des erfindungsgemäßen Verfahrens hinzufügen.

Die Erfindung ist anhand von Ausführungsbeispielen in der Zeichnung schematisch dargestellt und wird im Folgenden unter Bezugnahme auf die Zeichnung beschrieben.

### Kurze Beschreibung der Zeichnungen

- Figur 1: zeigt schematisch und perspektivisch eine bevorzugte Ausgestaltung eines erfindungsgemäßen Plattenwärmetauschers vor (Fig. 1A) und nach dem Anbringen der Ein- und Auslassaufsätze (Fig. 1B), der gemäß einer bevorzugten Ausführungsform eines erfindungsgemäßen Verfahrens hergestellt wurde und betrieben werden kann.
- Figur 2: zeigt schematisch einen Ausschnitt einer bevorzugten Ausgestaltung eines erfindungsgemäßen Plattenwärmetauschers.
- Figur 3: zeigt schematisch eine bevorzugte Ausführungsform eines erfindungsgemäßen Verfahrens als ein Blockdiagramm.

### Ausführungsform(en) der Erfindung

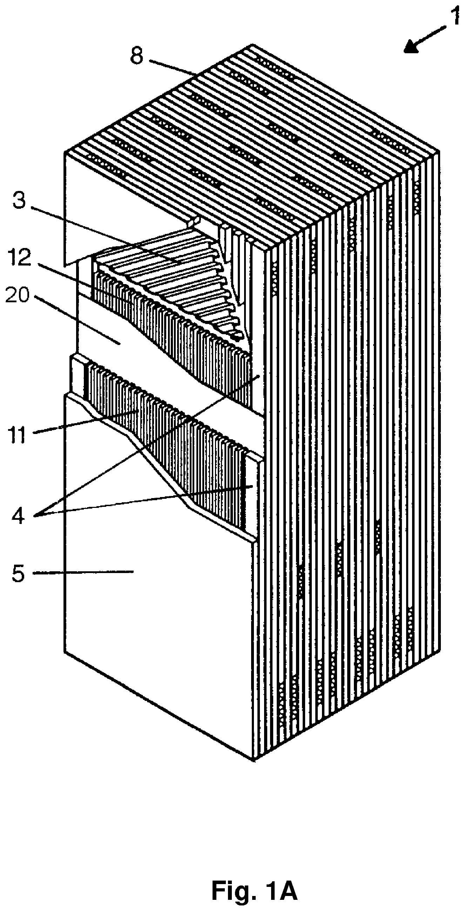

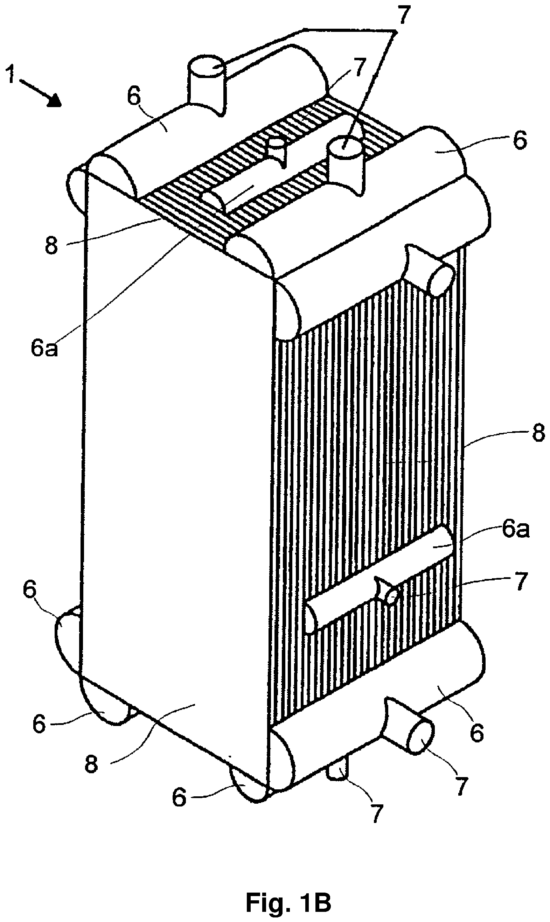

In Figur 1 ist eine bevorzugte Ausgestaltung eines erfindungsgemäßen Plattenwärmetauschers schematisch und perspektivisch dargestellt und mit 1 bezeichnet.

Der Plattenwärmetauscher 1 gemäß Figur 1A weist einen quaderförmigen Zentralkörper 8 mit einer Länge von beispielsweise mehreren Metern und einer Breite bzw. Höhe von beispielsweise etwa einem bzw. wenigen Metern auf. Im Wesentlichen handelt es sich bei dem Zentralkörper 8 um eine Anordnung aus sich abwechselnden Trennplatten 20 und Lamellen 11, 12 (sog. Fins). Der Zentralkörper 8 des Plattenwärmetauschers 1 weist also eine Vielzahl an Trennplatten und eine Vielzahl an Lamellen auf, wobei jeweils zwischen zwei benachbarten Trennplatten eine Lamelle angeordnet ist. Sowohl die Trennbleche als auch die Lamellen können beispielsweise aus Aluminium gefertigt sein. Zu ihren Seiten sind die Lamellen 11, 12 durch Randleisten (Sidebars) 4, die ebenfalls aus Aluminium gefertigt sein können, abgeschlossen, so dass durch die Stapelbauweise mit den Trennplatten 20 eine Seitenwand ausgebildet wird. Die außenliegenden Lamellen (hier 11) des Zentralkörpers 8 sind durch eine parallel zu den Lamellen und den Trennblechen liegende Abdeckung 5 (Deckblech) in der Regel ebenfalls aus Aluminium abgeschlossen.

Zur Herstellung des Plattenwärmetauschers 1 werden die in der Regel lotplattierten Trennbleche 20, Randleisten 4 und Lamellen (hier nur die Lamellen 11 und 12 bezeichnet) in einem Stapel zu dem hier dargestellten Zentralkörper 8 aufeinander gelegt, der dann in einem Lötofen unter Vakuum verlötet wird. Anschließend werden die zur Zu- und Ableitung der wärmetauschenden Fluide benötigten Ein- und Auslassaufsätze 6, 6a angebracht, wie sie in Figur 1B gezeigt sind.

Oben auf dem Zentralkörper 8, an dessen Seiten und unterhalb des Zentralkörpers 8 erkennt man in Figur 1B Aufsätze 6 und 6a. Die unterhalb des Zentralkörpers 8 und auf der der abgebildeten Seite abgewandten Seite befindlichen Aufsätze 6 und 6a sind teilweise verdeckt.

Durch Stutzen 7 kann dem Plattenwärmetauscher 1 ein Fluid bzw. Prozessstrom zugeführt bzw. diesem wieder entnommen werden. Die Aufsätze 6 und 6a dienen zur Verteilung des durch die Stutzen 7 eingebrachten Fluids bzw. zum Sammeln und zur Konzentration des aus dem Plattenwärmetauscher 1 zu entnehmenden Fluids, wobei die Verteilung bzw. das Sammeln über Verteilerlamellen ("distributor fins") 3 (vgl. Figur 1A) zu bzw. von den Wärmetauscher-Lamellen 11,12 erfolgt. Innerhalb des Plattenwärmetauschers 1 tauschen dann die verschiedenen Fluidströme Wärmeenergie aus.

Der in Figur 1 gezeigte Plattenwärmetauscher 1 ist dazu ausgelegt, Fluidströme in getrennten Passagen zum Wärmeaustausch aneinander vorbeizuführen. Ein Teil der Ströme kann gegensinnig aneinander vorbeigeführt werden, ein anderer Teil über Kreuz oder gleichsinnig.

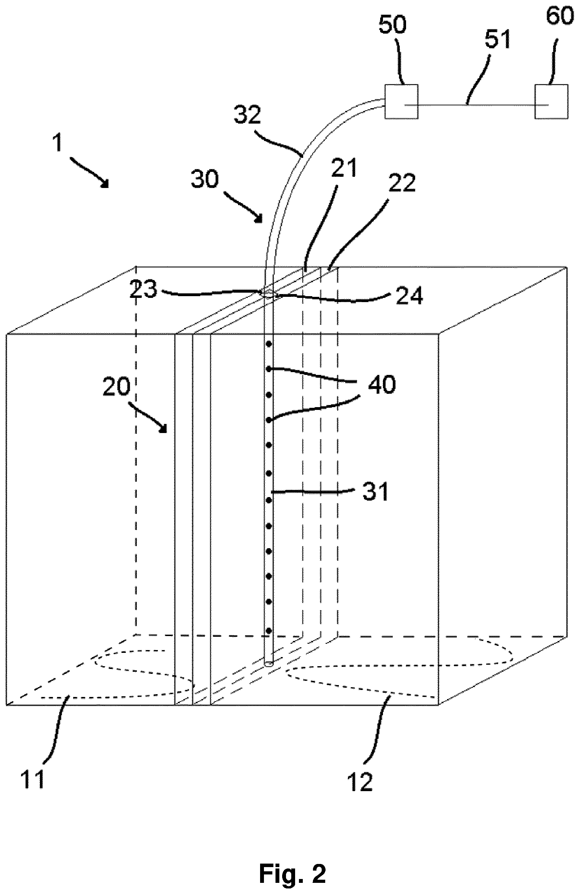

Wenigstens eine Kapillare mit einer Vielzahl von Thermo- oder Messwiderstandselementen ist in wenigstens eine Trennplatte 20 der Vielzahl von Trennplatten eingebracht, wie nachfolgend in Bezug auf Figur 2 erläutert wird, welche einen Ausschnitt des Plattenwärmetauschers 1 schematisch und perspektivisch zeigt.

Wie in Figur 2 zu erkennen ist, sind benachbart zu einer Trennplatte 20 Lamellen 11 und 12 angeordnet. Die Lamellen 11 und 12 sind lediglich sehr schematisch dargestellt, indem ihr Verlauf auf der unteren Fläche des hier dargestellten Ausschnitts angedeutet ist. Die durch die Lamellen 11 und 12 gebildeten Kanäle erstrecken sich parallel zum Abschnitt 31, der im Folgenden beschrieben ist. Die Trennplatte 20 weist zwei Teilplatten 21 und 22 auf, in welche jeweils eine Nut 23 bzw. 24 eingebracht ist. In diesen (Halb-)Nuten 23 bzw. 24 ist eine Kapillare 30 in die Trennplatte 20 eingebracht, insbesondere derart, dass die Kapillare 30 vollständig von dem Material der ersten Teilplatte 21 und der zweiten Teilplatte 22 umschlossen bzw. abgedeckt ist. Es ist auch möglich, nur eine Nut in nur eine der Teilplatten 21, 22 einzubringen, in die dann die Kapillare eingefügt wird. Als Teilplatten 21, 22 können beispielsweise übliche Trennplatten bzw. Trennbleche verwendet werden. Insbesondere weist die Kapillare 30 dabei einen ersten Abschnitt 31 innerhalb der Trennplatte 20 auf und einen zweiten Abschnitt 32 außerhalb der Trennplatte 20. In dem ersten Abschnitt 31 innerhalb der Trennplatte 20 ist in der Kapillare 30 eine Vielzahl von zueinander beabstandeten Thermo- oder Messwiderstandselementen 40 angeordnet ("Thermo- oder Messwiderstandselement-Profilstab"), mittels welcher Temperaturwerte entlang der Längsrichtung der Kapillare 30 innerhalb des Plattenwärmetauschers 1 erfasst werden können. Die Kapillare 30 ist in dem ersten Abschnitt 31 insbesondere dünnwandig ausgestaltet, bspw. als dünnes Edelstahlröhrchen, und in dem zweiten Abschnitt 32 metallisch gekapselt, also mittels eines Metalls umhüllt oder als dickeres Röhrchen ausgeführt.

Außerhalb der Trennplatte 20 ist die Kapillare 30 zu einem Übergabepunkt 50 geführt, welcher über eine Verkabelung 51 mit einer Recheneinheit 60, beispielsweise einer Steuereinheit verbunden werden kann. Insbesondere kann die Recheneinheit 60 die von den Thermo- oder Messwiderstandselementen 40 erfassten Temperaturwerte empfangen und auswerten und von dort bspw. mittels eines Senders die Ergebnisdaten an eine Cloud zur weiteren Verarbeitung senden. Der Übergabepunkt 50 kann beispielsweise eine Schnittstelle zwischen einer Prozesskammer, in welcher sich der Plattenwärmetauscher 1 befindet, und der Außenwelt darstellen, so dass die Recheneinheit 60 insbesondere nicht innerhalb der Prozesskammer angeordnet werden muss. Beispielsweise kann diese Prozesskammer ein Ofen bzw. Lötofen während eines Herstellungsprozess des Plattenwärmetauschers 1 sein oder ein Coldbox während des regulären Betriebs des Plattenwärmetauschers 1.

Falls es sich bei den Messelementen um Thermoelemente handelt, muss die Verkabelung im Bereich 51 optimaler Weise materialgleich vom Bereich 32 fortgesetzt werden. Andernfalls kann die Einheit 60 die Thermospannung nicht korrekt messen, es sei denn, die Temperatur an dem Übergabepunkt 50 würde auch gemessen und die Thermospannung entsprechend korrigiert. Bei Verwendung von Messwiderstandelementen können derartige Leitungsanschlussprobleme vermieden werden.

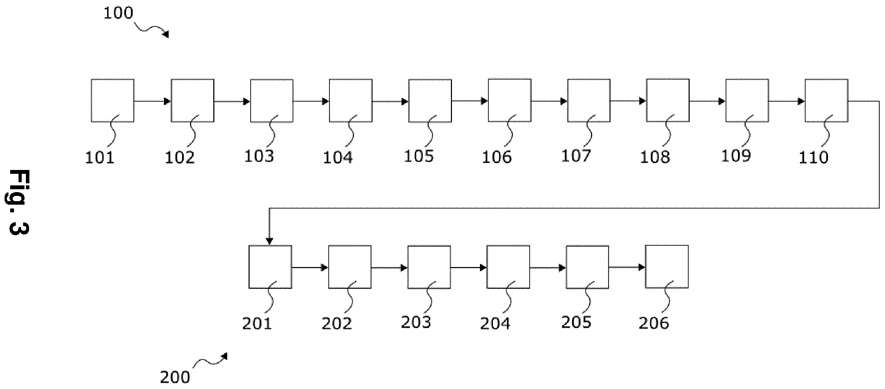

Der Plattenwärmetauscher 1 wird insbesondere gemäß einer bevorzugten Ausführungsform eines erfindungsgemäßen Verfahrens hergestellt und betrieben, wie nachfolgend in Bezug Figur 3 erläutert wird, in welcher eine bevorzugte Ausführungsform eines erfindungsgemäßen Verfahrens schematisch als ein Blockdiagramm dargestellt ist.

Ein Herstellungsprozess des Plattenwärmetauscher 1 ist dabei mit 100 bezeichnet. Im Zuge des Herstellungsprozess 100 wird zunächst in einem Schritt 101 eine Vielzahl an Trennplatten und eine Vielzahl an Lamellen bereitgestellt.

Die Trennplatten entsprechen beispielsweise den in Figur 2 dargestellten Teilplatten 21 und 22, weisen jedoch jeweils keine Nut auf. In einige der Trennplatten wird in Schritt 102 eine Nut gefräst, um Teilplatten 21 und 22 zu erhalten, wie sie in Figur 2 dargestellt sind. Beispielsweise kann in 25% der Vielzahl von Trennplatten jeweils eine Nut eingebracht werden.

In Schritt 103 wird jeweils zwischen zwei der in Schritt 102 mit Nuten versehenen Platten 21, 22 jeweils eine Kapillare 30 eingebracht, um jeweils eine Trennplatte 20 mit Kapillare 30 zu erhalten, wie sie in Figur 2 gezeigt ist. In diesem Beispiel sind Trennplatten 20 mit Kapillare 30 daher doppelt so dick wie Trennplatten ohne Kapillare, da die Trennplatten 20 mit Kapillare 30 aus je zwei derartigen Trennplatten ohne Kapillare gefertigt sind.

In Schritt 104 wird in einer Prozesskammer, z.B. einem Ofen, ein Lot auf die Flächen der Trennbleche aufgebracht und anschließend werden Trennbleche und Lamellen abwechselnd aufeinander gestapelt. Beispielsweise kann dabei jedes vierte Trennblech ein Trennblech 20 mit Kapillare 30 sein, so dass hier die aneinandergrenzenden Trennplatten (Teilplatten) durch Löten verbunden werden müssen. Nach dem Stapeln werden in Schritt 105 die einzelnen Kapillaren 30 über einen Übergabepunkt jeweils mit einer Recheneinheit verbunden und in Schritt 106 werden die Trennbleche und die Lamellen in dem Ofen mittels Löten miteinander stoffschlüssig verbunden.

Während des Lötens werden in Schritt 107 mit Hilfe der Thermo- oder Messwiderstandselemente 40 in den Kapillaren 30 Temperaturwerte innerhalb des Plattenwärmetauschers erfasst und an die Recheneinheit übermittelt. In Schritt 108 wird der weitere Lötprozess anhand der bzw. in Abhängigkeit von den erfassten Temperaturwerten überwacht. Insbesondere wird dabei eine Temperaturverteilung in dem Plattenwärmetauscher überwacht, zweckmäßigerweise um zu verhindern, dass es aufgrund unterschiedlicher thermischer Dehnungen während des Lötvorgangs und daraus resultierender Verformungsunterschiede zu Spaltbildungen innerhalb des Plattenwärmetauschers durch lose oder noch nicht ausreichend fest verbundene Trennplatten und Lamellen kommt.

Wenn die Lamellen und Trennplatten bzw. die Teilplatten erfolgreich miteinander verbunden wurden, werden in Schritt 109 die Aufsätze 6, 6a, Stutzen 7 und Abdeckung an dem Plattenwärmetauscher 1 angebracht. Wenn der Plattenwärmetauscher 1 erfolgreich hergestellt wurde, können die Kapillaren 30 von der Recheneinheit 60 in Schritt 110 getrennt werden.

Auch nach dem erfolgreich durchgeführten Herstellungsprozess verbleiben die Kapillare 30 innerhalb des Plattenwärmetauschers 1 und die Thermo- oder Messwiderstandselemente 40 können auch während des regulären Betriebs zum Erfassen von Temperaturwerten verwendet werden, wie nachfolgend erläutert wird.

Der reguläre Betrieb des Plattenwärmetauscher 1 ist in Figur 3 mit 200 bezeichnet. In Schritt 201 werden die Kapillaren 30 erneut mit einer Recheneinheit verbunden, beispielsweise mit einer Steuereinheit. In Schritt 202 werden zwei Fluide in Gegenstrom durch den Plattenwärmetauscher 1 geführt, um einen indirekten Wärmeaustausch zu vollziehen.

In Schritt 203 werden während dieses Betriebs des Plattenwärmetauschers mit Hilfe der Thermo- oder Messwiderstandselemente 40 in den Kapillaren 30 Temperaturwerte erfasst. In Schritt 204 wird der Betrieb des Plattenwärmetauschers 1 in Abhängigkeit von diesen erfassten Temperaturwerten gesteuert bzw. geregelt. Insbesondere kann dabei eine Optimierung des Betriebs durchgeführt werden, um die verbleibende Lebensdauer des Plattenwärmetauschers 1 verlängern zu können.

Ferner werden in Abhängigkeit von den erfassten Temperaturwerten in Schritt 205 ein Lebensdauerverbrauch bzw. eine verbleibende Lebensdauer des Plattenwärmetauschers 1 bestimmt. Beispielsweise können aus den Temperaturwerten thermische bzw. mechanische Spannungen innerhalb des Plattenwärmetausches 1 bestimmt werden, in Abhängigkeit von welchen der Lebensdauerverbrauch und die verbleibende Lebensdauer des Plattenwärmetauschers 1 bestimmt werden können.

In Schritt 206 werden die erfassten Temperaturwerte zweckmäßigerweise in der Recheneinheit archiviert, um für einen Vergleich mit zu einem späteren Zeitpunkt erfassten Temperaturwerten zur Verfügung zu stehen.

Durch die vorliegende Erfindung wird es somit ermöglicht, eine Temperaturerfassung im Zuge des Herstellungsprozesses des Plattenwärmetauschers 1 während des Verlötens der Lamellen und der Trennbleche und ferner im Zuge des regulären Betriebs des Plattenwärmetauschers 1 mit denselben Temperaturmesseinrichtungen in Form der Thermo- oder Messwiderstandselemente 40 in Kapillaren 30 durchzuführen. Die Thermo- oder Messwiderstandselemente 40, welche im Zuge des Herstellungsprozesses zum Überwachen des Lötens verwendet werden, können auch im regulären Betrieb weiter verwendet werden.

### Bezugszeichenliste

- 1: Plattenwärmetauscher
- 3: Verteilerlamellen
- 4: Randleisten (Sidebars)
- 5: Abdeckung
- 6: Aufsatz
- 6a: Aufsatz
- 7: Stutzen
- 8: Zentralkörper
- 11: Lamelle
- 12: Lamelle
- 20: Trennplatte
- 21: Teilplatte
- 22: Teilplatte
- 23: Nut
- 24: Nut
- 30: Kapillare
- 31: erster Abschnitt der Kapillare
- 32: zweiter Abschnitt der Kapillare
- 40: Thermo- oder Messwiderstandselement
- 50: Übergabepunkt
- 51: Leitung
- 60: Recheneinheit

- 100: Herstellungsprozess
- 101 bis 110: Verfahrensschritte
- 200: regulärer Betrieb
- 201 bis 206: Verfahrensschritte

## Patentansprüche

1. Verfahren zum Herstellen eines Plattenwärmetauschers (1) mit einer Vielzahl an Trennplatten (20) und einer Vielzahl an Lamellen (11, 12), wobei jeweils zwischen zwei benachbarten Trennplatten eine Lamelle angeordnet ist,
wobei jeweils abwechselnd eine Trennplatte und eine Lamelle angeordnet (104) und miteinander stoffschlüssig verbunden werden (106), wobei die Lamellen (11, 12) zu den Seiten hin durch Randleisten (4) begrenzt werden, und wobei die Randleisten (4) mit den angrenzenden Trennplatten (20) stoffschlüssig verbunden werden, wobei wenigstens eine Kapillare (30) mit wenigstens einem Thermo- und/oder Messwiderstandselement (40) in wenigstens eine Trennplatte (20) der Vielzahl von Trennplatten (20) eingebracht wird (103),
**dadurch gekennzeichnet, dass** pro Kapillare (30) eine Vielzahl von Thermo- oder Messwiderstandselementen (40) angeordnet wird.

2. Verfahren nach Anspruch 1, wobei mittels der Vielzahl von Thermo- oder Messwiderstandselements (40) in der wenigstens einen Kapillare (30) während des stoffschlüssigen Verbindens Temperaturwerte erfasst werden (107).

3. Verfahren nach Anspruch 1 oder 2, wobei die Trennplatten (20) und die Lamellen (11, 12) jeweils mittels eines Lötprozesses miteinander stoffschlüssig verbunden werden (106), insbesondere mittels eines Vakuum-Lötprozesses.

4. Verfahren nach einem der vorstehenden Ansprüche, wobei die wenigstens eine Kapillare (30) in eine Nut (23, 24) in der wenigstens einen Trennplatte (20) eingebracht wird (103).

5. Verfahren nach einem der vorstehenden Ansprüche, wobei die wenigstens eine Trennplatte (20) aus einer ersten Teilplatte (21) und einer zweiten Teilplatte (22) mit aneinandergrenzenden Flächen gebildet wird.

6. Verfahren nach Anspruch 4 und 5, wobei die Nut (23, 24) in zumindest eine der beiden angrenzenden Flächen der ersten und zweiten Teilplatte (21, 22) eingebracht wird.

7. Verfahren nach einem der vorstehenden Ansprüche, wobei die wenigstens eine Kapillare (30) in einem innerhalb der wenigstens einen Trennplatte (20) liegenden ersten Abschnitt (31) dünnwandig ausgebildet wird (31) und/oder wobei die wenigstens eine Kapillare (30) in einem außerhalb der wenigstens einen Trennplatte (20) liegenden zweiten Abschnitt (32) metallisch gekapselt wird (32).

8. Verfahren nach einem der vorstehenden Ansprüche, wobei die wenigstens eine Kapillare (30) aus einer Prozesskammer hinaus geführt wird, in welcher das stoffschlüssige Verbinden durchgeführt wird.

9. Verfahren zum Betreiben eines Plattenwärmetauschers (1), der gemäß einem Verfahren nach einem der vorstehenden Ansprüche hergestellt ist,
wobei ein erstes Fluid und ein zweites Fluid durch den Plattenwärmetauscher geleitet werden (202) und
**dadurch gekennzeichnet, dass** während des Betriebs des Plattenwärmetauschers (1) mittels der Vielzahl von Thermo- und/oder Messwiderstandselementen (40) in der wenigstens einen Kapillare (30) Temperaturwerte erfasst werden (203).

10. Verfahren nach Anspruch 9, wobei der Betrieb des Plattenwärmetauschers (1) in Abhängigkeit von den während des Betriebs des Plattenwärmetauschers (1) erfassten Temperaturwerten gesteuert und/oder geregelt wird (204).

11. Verfahren nach Anspruch 9 oder 10, wobei in Abhängigkeit von den während des Betriebs des Plattenwärmetauschers (1) erfassten Temperaturwerten ein Lebensdauerverbrauch und/oder eine verbleibende Lebensdauer des Plattenwärmetauschers (1) bestimmt werden (205).

12. Verfahren nach einem der Ansprüche 9 bis 11, wobei in Abhängigkeit von den während des Betriebs des Plattenwärmetauschers (1) erfassten Temperaturwerten eine Betriebshistorie des Plattenwärmetauschers (1) bestimmt wird.

13. Plattenwärmetauscher (1) mit einer Vielzahl an Trennplatten (20) und einer Vielzahl an Lamellen (11, 12), wobei jeweils zwischen zwei benachbarten Trennplatten der Vielzahl von Trennplatten eine Lamelle der Vielzahl von Lamellen angeordnet ist, wobei jeweils abwechselnd eine Trennplatte und eine Lamelle angeordnet (104) und miteinander stoffschlüssig verbunden sind (106), wobei die Lamellen (11, 12) zu den Seiten hin durch Randleisten (4) begrenzt sind, und wobei die Randleisten (4) mit den angrenzenden Trennplatten (20) stoffschlüssig verbunden sind, wobei wenigstens eine Kapillare (30) mit wenigstens einem Thermo- oder Messwiderstandselement (40) in wenigstens einer Trennplatte (20) der Vielzahl von Trennplatten angeordnet ist, **dadurch gekennzeichnet, dass** pro Kapillare (30) eine Vielzahl von Thermo- oder Messwiderstandselementen (40) angeordnet ist.

14. Plattenwärmetauscher (1) nach Anspruch 13, bei dem die wenigstens eine Trennplatte (20) aus einer ersten Teilplatte (21) und einer zweiten Teilplatte (22) mit aneinandergrenzenden Flächen gebildet ist, wobei eine Nut (23, 24) in zumindest eine der beiden angrenzenden Flächen der ersten und zweiten Teilplatte (21, 22) eingebracht ist und wobei die wenigstens eine Kapillare (30) in der Nut (23, 24) angeordnet ist.

15. Plattenwärmetauscher (1) nach Anspruch 13 oder 14, der gemäß einem Verfahren nach einem der Ansprüche 1 bis 7 hergestellt ist.

16. Plattenwärmetauscher (1) nach einem der Ansprüche 13 bis 15, der dazu eingerichtet ist, gemäß einem Verfahren nach einem der Ansprüche 8 bis 11 betrieben zu werden, insbesondere mit einer Steuereinheit, die dazu eingerichtet ist, ein Verfahren nach einem der Ansprüche 8 bis 11 durchzuführen.

## Claims

1. Method for producing a plate heat exchanger (1) comprising a plurality of separating plates (20) and a plurality of lamellae (11, 12), one lamella being arranged in each case between two adjacent separating plates,
a separating plate and a lamella being arranged (104) in each case alternately and being integrally connected (106) to one another, the lamellae (11, 12) being delimited at the sides by edge strips (4), and the edge strips (4) being integrally connected to the adjoining separating plates (20), at least one capillary (30) having at least one thermal and/or measurement resistance element (40) being introduced (103) into at least one separating plate (20) of the plurality of separating plates (20),
**characterized in that** a plurality of thermal or measurement resistance elements (40) are arranged per capillary (30).

2. Method according to claim 1, wherein temperature values are detected (107) by means of the plurality of thermal and/or measurement resistance elements (40) in the at least one capillary (30) during integral bonding.

3. Method according to claim 1 or 2, wherein the separating plates (20) and the lamellae (11, 12) are each integrally bonded to one another (106) by means of a soldering process, in particular by means of a vacuum-soldering process.

4. Method according to any of the preceding claims, wherein the at least one capillary (30) is introduced (103) into a groove (23, 24) in the at least one separating plate (20).

5. Method according to any of the preceding claims, wherein the at least one separating plate (20) is formed from a first partial plate (21) and a second partial plate (22) having adjoining surfaces.

6. Method according to claims 4 and 5, wherein the groove (23, 24) is introduced into at least one of the two adjoining surfaces of the first and second partial plates (21, 22).

7. Method according to any of the preceding claims, wherein the at least one capillary (30) is designed to be thin-walled (31) in a first portion (31) lying within the at least one separating plate (20) and/or wherein the at least one capillary (30) is encapsulated (32) in metal in a second portion (32) lying outside the at least one separating plate (20).

8. Method according to any of the preceding claims, wherein the at least one capillary (30) is guided out of a process chamber in which integral bonding is carried out.

9. Method for operating a plate heat exchanger (1) which is produced according to a method according to any of the preceding claims, a first fluid and a second fluid being passed through (202) the plate heat exchanger, and
**characterized in that** temperature values are detected (203) during operation of the plate heat exchanger (1) by means of the plurality of thermal and/or measurement resistance elements (40) in the at least one capillary (30).

10. Method according to claim 9, wherein operation of the plate heat exchanger (1) is controlled in an open loop and/or in a closed loop (204) depending on the temperature values detected during operation of the plate heat exchanger (1).

11. Method according to claim 9 or 10, wherein a lifetime consumption and/or a remaining service life of the plate heat exchanger (1) are determined (205) depending on the temperature values detected during operation of the plate heat exchanger (1).

12. Method according to any of claims 9 to 11, wherein an operating history of the plate heat exchanger (1) is determined depending on the temperature values detected during operation of the plate heat exchanger (1).

13. Plate heat exchanger (1) comprising a plurality of separating plates (20) and a plurality of lamellae (11, 12), one lamella of the plurality of lamellae being arranged in each case between two adjacent separating plates of the plurality of separating plates, a separating plate and a lamella being arranged (104) in each case alternately and being integrally connected (106) to one another, the lamellae (11, 12) being delimited at the sides by edge strips (4), and the edge strips (4) being integrally connected to the adjoining separating plates (20), at least one capillary (30) having at least one thermal or measurement resistance element (40) being arranged in at least one separating plate (20) of the plurality of separating plates, **characterized in that** a plurality of thermal or measurement resistance elements (40) are arranged per capillary (30).

14. Plate heat exchanger (1) according to claim 13, wherein the at least one separating plate (20) is formed from a first partial plate (21) and a second partial plate (22) having adjoining surfaces, wherein a groove (23, 24) is introduced into at least one of the two adjoining surfaces of the first and second partial plates (21, 22), and wherein the at least one capillary (30) is arranged in the groove (23, 24).

15. Plate heat exchanger (1) according to claim 13 or 14 which is produced according to a method according to any of claims 1 to 7.

16. Plate heat exchanger (1) according to any of claims 13 to 15 which is configured to be operated according to a method according to any of claims 8 to 11, in particular having a control unit which is configured to carry out a method according to any of claims 8 to 11.

## Revendications

1. Procédé pour la fabrication d'un échangeur de chaleur à plaques (1) comportant une pluralité de plaques de séparation (20) et une pluralité de lamelles (11, 12), dans lequel une lamelle est disposée respectivement entre deux plaques de séparation adjacentes,
dans lequel une plaque de séparation et une lamelle sont disposées (104) respectivement en alternance et reliées (106) l'une à l'autre par liaison de matière, dans lequel les lamelles (11, 12) sont limitées vers les côtés par des baguettes de bordure (4), et dans lequel les baguettes de bordure (4) sont reliées par liaison de matière aux plaques de séparation (20) adjacentes, dans lequel au moins un capillaire (30) comportant au moins un élément thermique et/ou formant résistance de mesure (40) est introduit (103) dans au moins une plaque de séparation (20) de la pluralité de plaques de séparation (20),
**caractérisé en ce qu'**une pluralité d'éléments thermiques ou formant résistances de mesure (40) sont disposés par capillaire (30).

2. Procédé selon la revendication 1, dans lequel, au moyen de la pluralité d'éléments thermiques ou formant résistances de mesure (40), des valeurs de température sont détectées (107) dans l'au moins un capillaire (30) pendant la liaison par liaison de matière.

3. Procédé selon la revendication 1 ou 2, dans lequel les plaques de séparation (20) et les lamelles (11, 12) sont reliées (106) les unes aux autres par liaison de matière respectivement au moyen d'un processus de brasage, en particulier au moyen d'un processus de brasage sous vide.

4. Procédé selon l'une des revendications précédentes, dans lequel l'au moins un capillaire (30) est introduit (103) dans une rainure (23, 24) dans l'au moins une plaque de séparation (20).

5. Procédé selon l'une des revendications précédentes, dans lequel l'au moins une plaque de séparation (20) est formée à partir d'une première plaque partielle (21) et d'une seconde plaque partielle (22) comportant des surfaces contigües.

6. Procédé selon la revendication 4 ou 5, dans lequel la rainure (23, 24) est introduite dans au moins une des deux surfaces adjacentes des première et seconde plaques partielles (21, 22).

7. Procédé selon l'une des revendications précédentes, dans lequel l'au moins un capillaire (30) est réalisé (31) avec une paroi mince dans une première section (31) se trouvant à l'intérieur de l'au moins une plaque de séparation (20) et/ou dans lequel l'au moins un capillaire (30) est encapsulé (32) de manière métallique dans une seconde section (32) se trouvant à l'extérieur de l'au moins une plaque de séparation (20).

8. Procédé selon l'une des revendications précédentes, dans lequel l'au moins un capillaire (30) est guidé en dehors d'une chambre de traitement, dans laquelle la liaison par liaison de matière est effectuée.

9. Procédé permettant de faire fonctionner un échangeur de chaleur à plaques (1) fabriqué conformément à un procédé selon l'une des revendications précédentes, dans lequel un premier fluide et un second fluide sont conduits (202) à travers l'échangeur de chaleur à plaques et
**caractérisé en ce que,** pendant le fonctionnement de l'échangeur de chaleur à plaques (1), des valeurs de température sont détectées (203) au moyen de la pluralité d'éléments thermiques et/ou formant résistances de mesure (40) dans l'au moins un capillaire (30).

10. Procédé selon la revendication 9, dans lequel le fonctionnement de l'échangeur de chaleur à plaques (1) est commandé et/ou régulé (204) en fonction des valeurs de température détectées pendant le fonctionnement de l'échangeur de chaleur à plaques (1).

11. Procédé selon la revendication 9 ou 10, dans lequel, en fonction des valeurs de température détectées pendant le fonctionnement de l'échangeur de chaleur à plaques (1), une utilisation sur la durée de vie et/ou une durée de vie restante de l'échangeur de chaleur à plaques (1) sont déterminées (205).

12. Procédé selon l'une des revendications 9 à 11, dans lequel, en fonction des valeurs de température détectées pendant le fonctionnement de l'échangeur de chaleur à plaques (1), un historique de fonctionnement de l'échangeur de chaleur à plaques (1) est déterminé.

13. Échangeur de chaleur à plaques (1) comportant une pluralité de plaques de séparation (20) et une pluralité de lamelles (11, 12), dans lequel une lamelle de la pluralité de lamelles est disposée respectivement entre deux plaques de séparation adjacentes de la pluralité de plaques de séparation, dans lequel une plaque de séparation et une lamelle sont disposées (104) respectivement en alternance et reliées (106) l'une à l'autre par liaison de matière, dans lequel les lamelles (11, 12) sont limitées vers les côtés par des baguettes de bordure (4), et dans lequel les baguettes de bordure (4) sont reliées par liaison de matière aux plaques de séparation (20) adjacentes, dans lequel au moins un capillaire (30) comportant au moins un élément thermique ou formant résistance de mesure (40) est disposé dans au moins une plaque de séparation (20) de la pluralité de plaques de séparation, **caractérisé en ce qu'**une pluralité d'éléments thermiques ou formant résistances de mesure (40) sont disposés par capillaire (30).

14. Échangeur de chaleur à plaques (1) selon la revendication 13, dans lequel l'au moins une plaque de séparation (20) est formée à partir d'une première plaque partielle (21) et d'une seconde plaque partielle (22) comportant des surfaces contigües, dans lequel une rainure (23, 24) est introduite dans au moins une des deux surfaces adjacentes des première et seconde plaques partielles (21, 22) et dans lequel l'au moins un capillaire (30) est disposé dans la rainure (23, 24).

15. Échangeur de chaleur à plaques (1) selon la revendication 13 ou 14, fabriqué conformément à un procédé selon l'une des revendications 1 à 7.

16. Échangeur de chaleur à plaques (1) selon l'une des revendications 13 à 15, conçu pour fonctionner conformément à un procédé selon l'une des revendications 8 à 11, en particulier comportant une unité de commande qui est configurée pour effectuer un procédé selon l'une des revendications 8 à 11.
